# EUROPEAN PATENT SPECIFICATION

(11) **EP 1 992 526 B1**
(45) Date of publication and mention of the grant of the patent: **16.09.2015**
(21) Application number: 08150778.2
(22) Date of filing: 29.01.2008
(51) Int. Cl.: B60R 21/16

(54) **Tether mounting method for airbag device, and airbag device**
Verfahren zur Montage eines Haltegurts für eine Airbag-Vorrichtung und Airbag-Vorrichtung
Procédé de montage d'attaches sur une dispositif de coussin d'air et dispositif de coussin d'air

(30) Priority: 16.05.2007 JP 2007130049
(43) Date of publication of application: 19.11.2008
(73) Proprietor: Takata Corporation, Tokyo 106-8510 (JP)
(72) Inventor: Kobayashi, Yoshihiro, Tokyo 106-8510 (JP)
(74) Representative: Vossius & Partner Patentanwälte Rechtsanwälte mbB

(56) References cited:
- EP-A1- 1 700 758
- EP-A2- 1 982 872
- JP-A- 2006 096 289

## Description

The present invention relates to a tether mounting method for an airbag device mounted in a vehicle such as an automobile, and to the airbag device. More specifically, the present invention relates to a tether mounting method suitable for an airbag device in which an airbag has a projecting portion, and to the airbag device.

An airbag device for absorbing an impact on a passenger or a pedestrian by inflating and deploying an airbag inside or outside a vehicle, such as an automobile, in case of a collision or the like is now commonly mounted in the vehicle. Various types of airbag devices have been developed and adopted. These airbag devices include, for example, a driver airbag device built in a steering wheel, a passenger airbag device built in an instrument panel, a side airbag device built in a side portion of the vehicle or a seat, a curtain airbag device built in the upper portion of a door, and a pedestrian airbag device built below a hood. These airbag devices generally include an inflator for generating gas on a predetermined condition, an airbag connected to the inflator, and a retainer that stores the airbag. The shape of the airbag is designed in accordance with the type of the airbag device and the type of the vehicle, and airbags of various shapes exist. An airbag exists which includes a main body connected to the inflator, and a projecting portion projecting from the main body in a predetermined direction. An airbag device using the airbag having this shape is, for example, a pedestrian airbag device.

When a vehicle, such as an automobile, collides with a pedestrian, a bicycle, or the like, a pedestrian airbag device absorbs an impact caused by the collision of the pedestrian or a passenger of the bicycle or the like (hereinafter referred to as a "pedestrian or the like") with a pillar (a column linking the body and the roof) of the vehicle. Pillars are classified into an A-pillar (or a front pillar) disposed on the front side of the vehicle, a B-pillar (or a center pillar) disposed between the front seat and the rear seat, and a C-pillar (or a rear pillar) disposed on the rear side. Pedestrian airbag devices that cover an A-pillar, of these pillars are disclosed, for example, in JP-A-2004-299442 (Patent Document 1) and JP-A-2006-205934 (Patent Document 2) which compound to the preamble of claim 1 and 5.

Airbags in the pedestrian airbag devices disclosed in Patent Document 1 and Patent Document 2 include a main body that is inflated and deployed along a lower portion of a front window glass of the vehicle, and a pair of pillar covering portions (projecting portions) that are inflated and deployed from both ends of the main body along the A-pillar of the vehicle.

In an airbag having a projecting portion, such as the airbag of the pedestrian airbag device, the projecting portion flutters during inflation and deployment of the airbag, and the projecting portion cannot be quickly inflated and deployed along the pillar. Accordingly, a band called a tether is connected to the airbag, and fluttering is suppressed by the tension of the tether. For example, the airbag described in Patent Document 1, a tether connected between the vicinity of an outer peripheral edge of a pillar covering portion (pillar protecting portion) and the body of the vehicle and a tether connected between the vicinity of a rear side edge near the connecting portion of the pillar covering portion (pillar protecting portion) and the body of the vehicle are disclosed. In the airbag described in Patent Document 2, a tether that connects a main body (first air chamber) and a middle portion of a pillar covering portion (second air chamber) is disclosed.

In the tethers disclosed in Patent Document 1, however, fluttering of the projecting portion cannot be efficiently suppressed only with one of the tethers, and at least both tethers are necessary in actuality. Therefore, the number of tethers increases, and the volume of the airbag in a folded state increases. This reduces the storage efficiency of the airbag. Further, when the tether is connected to the outer peripheral edge of the airbag, it changes the shape of the airbag after the completion of inflation and deployment. In contrast, Patent Document 2 discloses only that the tether is connected to the middle portion of the projecting portion (second air chamber), but does not specifically disclose the tether connecting position best suited to suppress fluttering. Therefore, fluttering of the airbag cannot always be efficiently suppressed. Since this tether connects the main body (first air chamber) and the projecting portion (second air chamber), the length of the tether increases, and the volume of the airbag in a folded state increases. This reduces the storage efficiency of the airbag. In addition, since the airbag is pulled by both ends of the tether, the shape of the airbag after the completion of inflation and deployment is changed.

The present invention has been made in view of the above-described problems, and an object of the invention is to provide an airbag device and a tether mounting method for the airbag device that allow an airbag to be quickly inflated and deployed while suppressing fluttering of a projecting portion of the airbag and that can improve the storage efficiency of the airbag.

This object, is achieved by the features of the claims.

In the airbag device and the tether mounting method for the airbag device described above according to the present invention, since one end of the tether is connected to the projected center of gravity of the projecting portion, fluttering during inflation and deployment can be efficiently suppressed with one tether, and the projecting portion can be quickly inflated and deployed, regardless of the shape of the airbag. Further, since the other end of the tether is connected to the retainer, the length of the tether can be decreased. Therefore, the number and length of the tether can be minimized, and this can improve the storage efficiency of the airbag. By finding the projected center of gravity by assuming the virtual division including the projecting portion, the tether connecting position can be set more properly.

Embodiments of the present invention will be described below with reference to the drawings:
Figs. 1(A) and 1(B) are views showing an airbag device according to the present invention, Fig. 1(A) is a view showing the position of the device in a vehicle, and Fig. 1(B) is a sectional view on arrows B-B in Fig. 1(A);
Figs. 2(A) to 2(D) are views showing a tether mounting method according to a first embodiment of the present invention, and show cases that are different in the definition of a pillar covering portion 1b;
Figs. 3(A) to 3(C) are views showing a tether mounting method according to a second embodiment of the present invention, and show cases that are different in the position of a retainer;
Figs. 4(A) to 4(D) are views showing a tether mounting method according to a third embodiment of the present invention, and show cases that are different in the method for obtaining a virtual division.
Figs. 5 to 10 show examples which may further help to understand the invention:
Figs. 5(A) to 5(D) are views showing a tether mounting method;
Figs. 6(A) to 6(C) are views showing a tether mounting method;
Figs. 7(A) to 7(D) are views showing a tether mounting method;
Figs. 8(A) to 8(C) are views showing a tether mounting method;
Figs. 9(A) to 9(C) are views showing a tether mounting method; and
Figs. 10(A) and 10(B) are views showing a tether mounting method
Figs. 11(A) and 11(B) are views showing an airbag device having a substantially U-shaped airbag 7, Fig. 11(A) shows a state after inflation and deployment of the airbag, and Fig. 11(B) shows a state before inflation and deployment of the airbag.

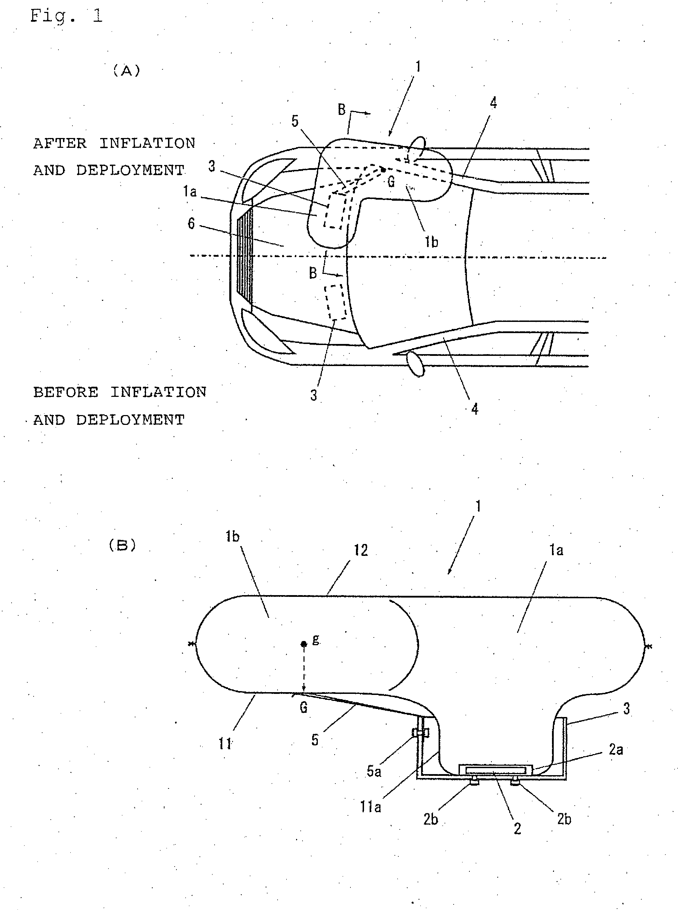

Figs. 1(A) and 1(B) are views of an airbag device according to the present invention. Fig. 1(A) is a view showing the position of the device in a vehicle, and Fig. 1(B) is a sectional view on arrows B-B in Fig. 1(A). In Fig. 1(A), a part above a one-dot chain line shows a state after inflation and deployment of an airbag, and a part below the one-dot chain line shows a state before inflation and deployment of the airbag.

The airbag device shown in Fig. 1 includes an airbag 1 that is inflated and deployed onto a surface of a vehicle when a vehicle-mounted ECU (electronic control unit) detects or predicts a collision between a pedestrian or the like and the vehicle, an inflator 2 that supplies gas to the airbag 1, and a retainer 3 that stores the airbag 1 and the inflator 2. The airbag 1 includes a main body 1a to be inflated onto the surface of the vehicle, and a pillar covering portion 1b to be inflated and deployed from an end of the main body 1a along a pillar 4 of the vehicle. As shown in Fig. 1(B), the airbag 1 also includes a tether 5. The tether 5 is connected at one end to projected center of gravity G obtained by projecting a center of gravity g of the inflated pillar covering portion 1b onto a vehicle-structure-side surface of the pillar covering portion 1b, and is connected at the other end to the retainer 3.

The airbag device is a pedestrian airbag device that absorbs an impact made when the pedestrian or the like collides with an A-pillar, and is one of airbag devices in which the airbag 1 has a projecting portion. The airbag device shown in Fig. 1(A) is disposed at each of two right and left positions on the inner side of a front hood 6. In the airbag 1 of each airbag device, the main body 1a is inflated and deployed on the front hood 6, and the pillar covering portion 1b is inflated and deployed along the pillar 4 of the vehicle.

The airbag 1 is stored in a folded manner inside the retainer 3 before inflation and deployment, and is inflated in a substantially L-shape so as to cover the pillar 4 after inflation and deployment, as shown in Fig. 1(A). That is, the pillar covering portion 1b forms a projecting portion of the airbag 1. As shown in Fig. 1(B), the airbag 1 is defined by a vehicle-structure-side panel 11 that covers surfaces of vehicle structures such as the pillar 4 and the front hood 6, and a pedestrian-side panel 12 to come into contact with the pedestrian or the like. The vehicle-structure-side panel 11 and the pedestrian-side panel 12 have a substantially L-shape, as shown in Fig. 1(A), and are sewn together one on top of another along their outer peripheral edges. The vehicle-structure-side panel 11 has a convex portion 11a that stores the inflator 2 and is fixed to the retainer 3, as shown in Fig. 1(B).

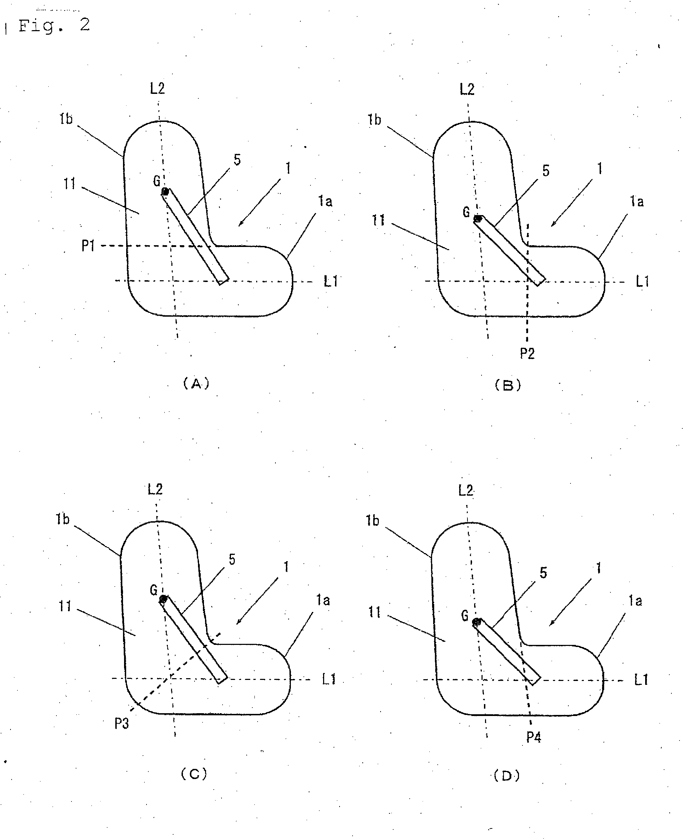

The definition of the pillar covering portion 1b serving as the projecting potion will now be described with reference to Fig. 2. Figs. 2(A) to 2(D) are views showing a tether mounting method according to a first embodiment of the present invention, and illustrate patterns that are different in definition of the pillar covering portion 1b. A pillar covering portion 1b shown in Fig. 2(A) is defined as a portion projecting toward the rear of the vehicle when the airbag 1 is divided by a plane P1 extending from a plane provided along the outer peripheral edge of the main body 1a on the rear side of the vehicle. A pillar covering portion 1b shown in Fig. 2(B) is defined as a portion including a portion projecting toward the rear of the vehicle when the airbag 1 is divided by a plane P2 having a perpendicularly serving as an axis L1 of the main body 1a and passing through the vicinity of the corner of the airbag 1 on the rear side of the vehicle. A pillar covering portion 1b shown in Fig. 2(C) is defined a portion including a portion projecting toward the rear of the vehicle when the airbag 1 is divided by a plane P3 that passes almost the center of the corner of the airbag 1 on the front side of the vehicle (or the outer side in the width direction) and almost the center of the corner on the rear side of the vehicle (or the inner side in the width direction). A pillar covering portion 1b shown in Fig. 2(D) is defined as a portion including a portion projecting toward the rear of the vehicle when the airbag 1 is divided by a plane P4 extending from an outer peripheral edge of the portion of the airbag 1 projecting toward the rear of the vehicle near the main body 1a.

The tether mounting method according to the present invention includes a calculation step of finding a center of gravity g of the inflated pillar covering portion 1b defined by any of Figs. 2(A) to 2(D), a projection step of finding a projected center of gravity G by projecting the center of gravity g onto the surface of the vehicle-structure-side panel 11 of the pillar covering portion 1b, and a mounting step of connecting one end of the tether 5 to the projected center of gravity G and connecting the other end of the tether 5 to the retainer 3. Figs. 2(A) to 2(D) show the airbag 1, as viewed from the vehicle structure side, that is, show the states in which the airbag 1 is placed on the plane with the vehicle-structure-side panel 11 facing out.

In the above-described calculation step, the center of gravity g shown in Fig. 1(B) can be easily calculated, for example, on a CAD system used for design of the airbag 1. In the projection step, a perpendicular passing through the center of gravity g is selected from perpendiculars of the vehicle-structure-side panel 11, and the projected center of gravity G is calculated as an intersection point of the perpendicular and the vehicle-structure-side panel 11. The projected center of gravity G can also be easily determined on the CAD system, similarly to the center of gravity g.

It is possible to respond to airbags 1 of various shapes and types by setting the connecting position of the tether 5 with reference to the center of gravity g of the pillar covering portion 1b serving as the projecting portion of the airbag 1 in this way. Even when the airbag 1 has a complicated structure, fluttering of the airbag 1 during inflation and deployment can be efficiently suppressed by one tether 5. This allows the airbag 1 to be quickly inflated and deployed so that the pillar covering portion 1b lines the pillar 4.

In the above-described mounting step, one end of the tether 5 is connected to the vicinity of the projected center of gravity G. In the airbags 1 shown in Figs. 2(A) to 2(D), one end of the tether 5 is connected to a position that almost coincides with the projected center of gravity G. More specifically, the tether 5 is connected by being sewn to the surface of the vehicle-structure-side panel 11. Although not shown, the other end of the tether 5 has a fastening hole, and is fixed to a side face of the retainer 3 by a fastener 5a such as a bolt, as shown in Fig. 1(B). Instead of being fixed to the side face of the retainer 3, the other end of the tether 5 may be fixed to a fastener 2b with which the inflator 2 is fixed to the retainer 3 or to a case 2a storing the inflator 2 in the retainer 3. In the airbags 1 shown in Figs. 2(A) to 2(D), the shape and mounting position of the retainer 3 differ in accordance with the type of the airbag 1 and the vehicle model. Therefore, the state in which the other end of the tether 5 is placed on the axis L1 of the main body 1a is shown exemplarily.

Since one end of the tether 5 is connected to the projected center of gravity G and the other end is connected to the retainer 3 in this way, the tension acting on the airbag 1 can be easily adjusted by adjusting the length of the tether 5. Therefore, the number and length of the tethers 5 can be minimized. This can improve the storage efficiency of the airbag 1.

The inflator 2 is substantially cylindrical, is stored in a metal or resin case 2a, and is stored in the retainer 3 while being placed in the airbag 1. The inflator 2 is fixed to the retainer 3 by fasteners 2b, such as bolts and nuts, that connect the case 2a and the retainer 3. The inflator 2 is also connected to an ECU that is not shown, is ignited by an ignition current from the ECU so as to burn agent stored in the inflator 2, generates gas by burning the agent, and supplies the gas to the airbag 1. The inflator 2 may be externally attached to the retainer 3.

As shown in Fig. 1(B), the retainer 3 has a space that stores the airbag 1 and the inflator 2, and is shaped such as to have an upper opening. The opening is entirely or partially closed by a lid or a binder (not shown) such as a strap. The retainer 3 storing the airbag 1 and the inflator 2 is fixed to, for example, the back side of an opening provided in the front hood 6 by a bolt or the like. The shape of the retainer 3 is appropriately designed in accordance with the vehicle type or the like, and is not limited to the illustrated shape.

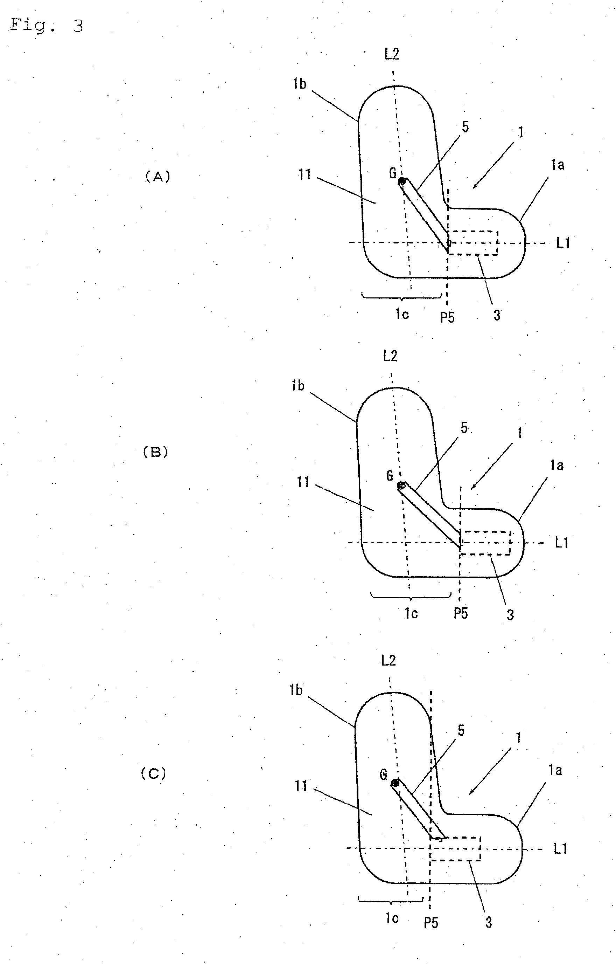

A tether mounting method according to a second embodiment of the present invention will now be described. Figs. 3(A) to 3(D) are views showing the tether mounting method according to the second embodiment of the present invention, and illustrate patterns that are different in the position of a retainer 3. Figs. 3(A) to 3(C) each show an airbag 1, as viewed from the vehicle structure side, that is, show a state in which the airbag 1 is placed on the plane with a vehicle-structure-side panel 11 facing out.

The tether mounting method shown in Fig. 3 includes a calculation step of finding a center of gravity g of a virtual division 1c including a pillar covering portion 1b when the airbag 1 is divided by a virtual dividing plane P5 that is parallel to a plane having a perpendicular serving as an axis L1 of a main body 1a and that lines a side face of the retainer 3 toward the pillar covering portion 1b, a projection step of finding a projected center of gravity G obtained by projecting the center of gravity g onto a surface of the vehicle-structure-side panel 11 of the pillar covering portion 1b, and a mounting step of connecting one end of a tether 5 to the projected center of gravity G and connecting the other end of the tether 5 to the retainer 3. A difference from the first embodiment shown in Fig. 2 is that the center of gravity g of the virtual division 1c including the pillar covering portion 1b is found in the calculation step, instead of finding the center of gravity g of the pillar covering portion 1b serving as the projecting portion. This is because fluttering of the airbag 1 can sometimes be more efficiently suppressed in accordance with the type or shape of the airbag 1 when the portion protruding from the side face of the retainer 3 is assumed as the projecting portion.

In a pattern shown in Fig. 3(A), the side face of the retainer 3 passes through the vicinity of the corner of the airbag 1 on the rear side of the vehicle (or the inner side in the width direction). In this case, the shape of the virtual division 1c in Fig. 3(A) is substantially identical to the shape of the pillar covering portion 1b shown in Fig. 2(B). Therefore, the center of gravity g and the projected center of gravity G to be found are provided at almost the same positions as those in Fig. 2(B). One end of the tether 5 is connected to almost the same position as the projected center of gravity G, and the other end of the tether 5 is fixed to the side face of the retainer 3 perpendicular to the axis L1 of the main body 1a.

In a pattern shown in Fig. 3(B), the retainer 3 is disposed farther from the pillar covering portion 1b than in the state shown in Fig. 3(A). In this case, since the virtual division 1c is larger than the pillar covering portion 1b, the center of gravity g and the projected center of gravity G are shifted toward the main body 1a from the positions shown in Fig. 3(A). One end of the tether 5 is connected to almost the same position as that of the projected center of gravity G, and the other end of the tether 5 is fixed to the side face of the retainer 3 perpendicular to the axis L1 of the main body 1a.

In a pattern shown in Fig. 3(C), the retainer 3 is disposed closer to the pillar covering portion 1b than in the state shown in Fig. 3(A). In this case, since the virtual division 1c is narrower than the pillar covering portion 1b, the center of gravity g and the projected center of gravity G are shifted to the outside in the width direction of the airbag 1 from the positions shown in Fig. 3(A). One end of the tether 5 is connected to almost the same position as that of the projected center of gravity G, and the other end of the tether 5 is connected to a side face of the retainer 3 parallel to the axis L1 of the main body 1a.

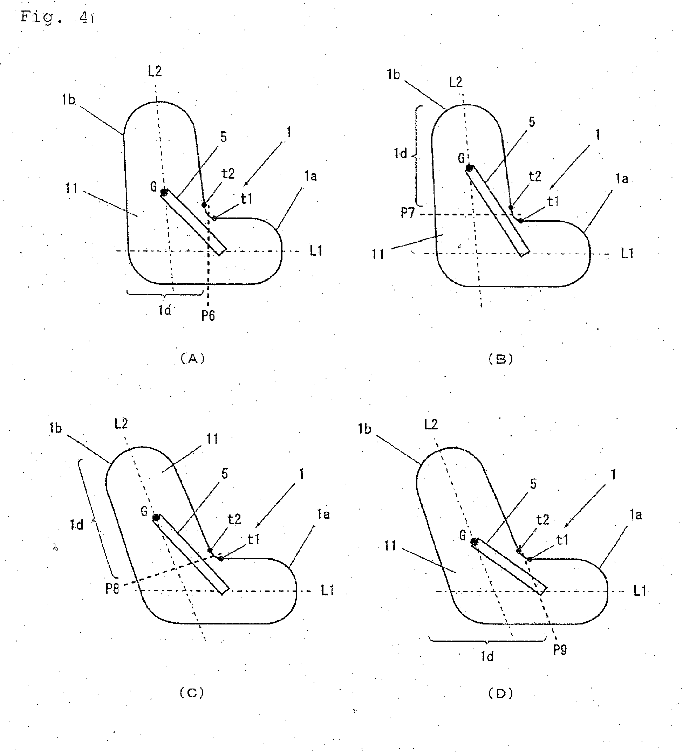

A tether mounting method according to a third embodiment of the present invention will now be described. Figs. 4(A) to 4(D) are views showing the tether mounting method according to the third embodiment of the present invention, and illustrate patterns that are different in the dividing method for a virtual division. Figs. 4(A) to 4(D) each show an airbag 1, as viewed from the vehicle structure side, that is, show a state in which the airbag 1 is placed on the plane with a vehicle-structure-side panel 11 facing out.

The tether mounting method shown in Fig. 4 includes a calculation step, a projection step, and a mounting step, similarly to the first and second embodiments, and is different from the first and second embodiments in a method for calculating the center of gravity g in the calculation step. The calculation step will be described below with reference to Figs. 4(A) to 4(d). In the figures, a retainer 3 is not shown, and a state in which the other end of a tether 5 is placed on an axis L1 of a main body 1a is shown exemplarily.

In a calculation step of the tether mounting method shown in Fig. 4(A), an airbag 1 is divided by a virtual dividing plane P6 that passes between a turn start point t1 and a turn end point t2 in an outer peripheral portion extending from the main body 1a to a pillar covering portion 1b on the rear side of the vehicle (or on the inner side in the width direction) and that is parallel to a plane having a perpendicular serving as an axis L1 of the main body 1a. A center of gravity g of a virtual division 1d including the pillar covering portion 1b is found. This is because fluttering of the airbag 1 can sometimes be more efficiently suppressed when the virtual division 1d is assumed regardless of the position of the retainer 3, depending on the type and shape of the airbag 1. When the side face of the retainer 3 shown in Fig. 3 is placed between the turn start point t1 and the turn end point t2, a virtual division substantially identical to that in the second embodiment shown in Fig. 3(A) is obtained.

In a calculation step of the tether mounting method shown in Fig. 4(B), an airbag 1 is divided by a virtual dividing plane P7 that passes between the turn start point t1 and the turn end point t2 in the outer peripheral portion extending from the main body 1a to the pillar covering portion 1b on the rear side of the vehicle (or on the inner side in the width direction) and that is perpendicular to a plane having a perpendicular serving as the axis L1 of the main body 1a. A center of gravity g of a virtual division 1d including the pillar covering portion 1b is found. When the virtual dividing plane P7 is set to pass through the turn start point t1, the virtual division 1d has a shape substantially identical to that of the pillar covering portion 1b in the first embodiment shown in Fig. 2(A).

In a calculation step of the tether mounting method shown in Fig. 4(C), the airbag 1 is divided by a virtual dividing plane P8 that passes between the turn start point t1 and the turn end point t2 in the outer peripheral portion extending from the main body 1a to the pillar covering portion 1b on the rear side of the vehicle (or on the inner side in the width direction) and that is parallel to a plane having a perpendicular serving as an axis L2 of the pillar covering portion 1b. A center of gravity g of a.virtual division 1d including the pillar covering portion 1b is found. In Figs. 4(C) and 4(D), the angle formed by the axis L1 and the axis L2 is larger than in Figs. 4(A) and 4(B) so that the virtual dividing planes P8 and P9 are clear. That is, in other words, the calculation steps shown in Figs. 4(C) and 4(D) are suitably adopted when the angle formed by the axis L1 and the axis L2 is more than 90°. When the angle formed by the axis L1 and the axis L2 is about 135°, the virtual division 1d has a shape substantially identical to that of the pillar covering portion 1b in the first embodiment shown in Fig. 2(C).

In a calculation step of the tether mounting method shown in Fig. 4(D), the airbag 1 is divided by a virtual dividing plane P9 that passes between the turn start point t1 and the turn end point t2 in the outer peripheral portion extending from the main body 1a to the pillar covering portion 1b on the rear side of the vehicle (or on the inner side in the width direction) and that is perpendicular to the plane having the perpendicular serving as the axis L2 of the pillar covering portion 1b. A center of gravity g of a virtual division 1d including the pillar covering portion 1b is found. When the plane P4 shown in Fig. 2(D) is parallel to the axis L2 and the virtual dividing plane P9 passes through the turn end point t2, the virtual division 1d has a shape substantially identical to that of the pillar covering portion 1b in the first embodiment shown in Fig. 2(D).

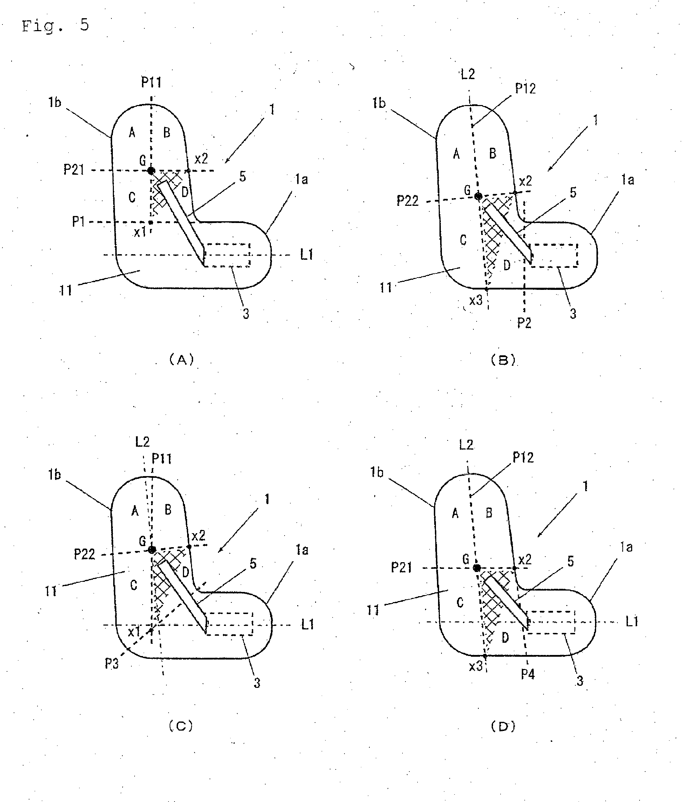

Figs. 5(A) to 5(D) are views showing the tether mounting method according to an example. Figs. 5(A) to 5(D) show an airbag 1, as viewed from the vehicle structure side, that is, show a state in which the airbag 1 is placed on the plane with a vehicle-structure-side panel 11 facing out.

The tether mounting method shown in Fig. 5 includes a calculation step, a projection step, and a mounting step, similarly to the first embodiment shown in Fig. 2, and is different from the first embodiment in that one end of a tether 5 is connected in the mounting step on the basis of the center of gravity G calculated in the first embodiment.

In an airbag 1 shown in Fig. 5(A), a main body 1a and a pillar covering portion 1b are defined by a plane P1. A surface of a vehicle-structure-side panel 11 in the pillar covering portion 1b is divided into four regions, an A-region, a B-region, a C-region, and a D-region, by a first plane P11 extending parallel to a plane having a perpendicular serving as an axis L1 of the main body 1a and passing through a projected center of gravity G, and a second plane P21 extending perpendicularly to the plane having the perpendicular serving as the axis L1 of the main body 1a and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x1 of the first plane P11 and the plane P1, an intersection point x2 of the second plane P21 and the pillar covering portion 1b, and the center of gravity G. That is, the double-hatched portion is defined as the vicinity of the center of gravity G. When one end of the tether 5 is connected in this way, an advantage similar to that obtained when one end of the tether 5 is connected to the position of the center of gravity G is obtained.

In an airbag 1 shown in Fig. 5(B), a main body 1a and a pillar covering portion 1b are defined by a plane P2. A surface of a vehicle-structure-side panel 11 in the pillar covering portion 1b is divided into four regions, an A-region, a B-region, a C-region, and a D-region, by a first plane P12 extending perpendicularly to a plane having a perpendicular serving as an axis L2 of the pillar covering portion 1b and passing through a projected center of gravity G, and a second plane P22 extending parallel to the plane having the perpendicular serving as the axis L2 of the pillar covering portion 1b and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x3 of the first plane P12 and the pillar covering portion 1b, an intersection point x2 of the second plane P22 and the pillar covering portion 1b, and the center of gravity G.

In an airbag 1 shown in Fig. 5(C), a main body 1a and a pillar covering portion 1b are defined by a plane P3. A surface of a vehicle-structure-side panel 11 in the pillar covering portion 1b is divided into four regions, an A-region, a B-region, a C-region, and a D-region, by a first plane P11 extending parallel to a plane having a perpendicular serving as an axis L1 of the main body 1a and passing through a projected center of gravity G, and a second plane P22 extending parallel to a plane having a perpendicular serving as an axis L2 of the pillar covering portion 1b and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x1 of the first plane P11 and the plane P3, an intersection point x2 of the second plane P22 and the pillar covering portion 1b, and the center of gravity G.

In an airbag 1 shown in Fig. 5(D), a main body 1a and a pillar covering portion 1b are defined by a plane P4. A surface of a vehicle-structure-side panel 11 in the pillar covering portion 1b is divided into four regions, an A-region, a B-region, a C-region, and a D-region, by a first plane P12 extending perpendicularly to a plane having a perpendicular serving as an axis L2 of the pillar covering portion 1b and passing through a projected center of gravity G, and a second plane P21 that extending parallel to a plane having a perpendicular serving as an axis L1 of the main body 1a and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x3 of the first plane P12 and the pillar covering portion 1b, an intersection point x2 of the second plane P21 and the pillar covering portion 1b, and the center of gravity G.

The tether mounting method according to Figs. 5(A) to 5(D) is just exemplary. In the figures, the first planes P11 and P12 and the second planes P21 and P22 can be combined optionally.

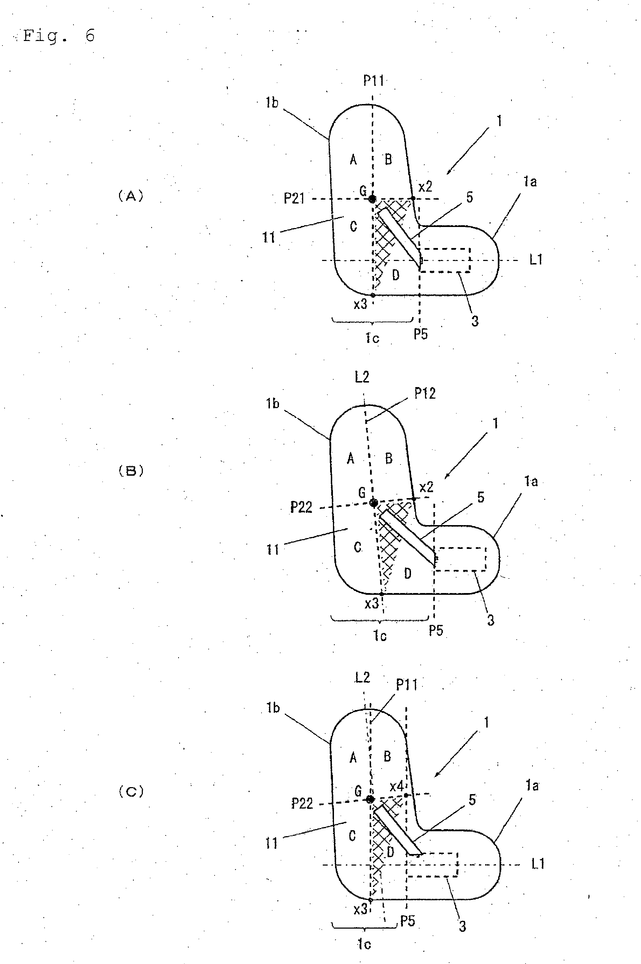

Figs. 6(A) to 6(C) are views showing the tether mounting method according to a further example. . Figs. 6(A) to 6(C) each show' an airbag 1, as viewed from the vehicle structure side, that is, show a state in which the airbag 1 is placed on the plane with a vehicle-structure-side panel 11 facing out.

The tether mounting method shown in Fig. 6 includes a calculation step, a projection step, and a mounting step, similarly to the second embodiment shown in Fig. 3, and is different from the second embodiment in that one end of a tether 5 is connected in the mounting step on the basis of the center of gravity G calculated in the second embodiment.

In an airbag 1 shown in Fig. 6(A), a virtual division 1c is defined by a plane P5. A surface of a vehicle-structure-side panel 11 in the virtual division 1c is divided into four regions, an A-region, a B-region, a C-region, and a D-region, by a first plane P11 extending parallel to a plane having a perpendicular serving as an axis L1 of a main body 1a and passing through the projected center of gravity G, and a second plane P21 extending perpendicularly to the plane having the perpendicular serving as the axis L1 of the main body 1a and passing through the projected center of gravity G. One end of the tether 5 is connected to the D-region serving as a proximity region closest to a retainer 3. More specifically, one end of the tether 5 is connected to a portion (a double-hatched portion) of the D-region surrounded by an intersection point x3 of the first plane P11 and the virtual division 1c, an intersection point x2 of the second plane P21 and the virtual division 1c, and the center of gravity G. That is, the double-hatched portion is defined as the vicinity of the center of gravity G. When one end of the tether 5 is connected in this way, an advantage similar to that obtained when one end of the tether 5 is connected to the position of the center of gravity G is obtained.

In an airbag 1 shown in Fig. 6(B), a virtual division 1c is defined by a plane P5. A surface of a vehicle-structure-side panel 11 in the virtual division 1c is divided into four regions, an A-region, a B-region, a C-region, and a D-region, by a first plane P12 extending perpendicularly to a plane having a perpendicular serving as an axis L2 of a pillar covering portion 1b and passing through the projected center of gravity G, and a second plane P22 extending parallel to the plane having the perpendicular serving as the axis L2 of the pillar covering portion 1b and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x3 of the first plane P12 and the virtual division 1c, an intersection point x2 of the second plane P22 and the virtual division 1c, and the center of gravity G.

In an airbag 1 shown in Fig. 6(C), a virtual division 1c is defined by a plane P5. A surface of a vehicle-structure-side panel 11 in the virtual division 1c is divided into four regions, an A-region, a B-region, a C-region, and a D-region, by a first plane P11 extending parallel to a plane having a perpendicular serving as an axis L1 of a main body 1a and passing through the projected center of gravity G, and a second plane P22 extending parallel to a plane having a perpendicular serving as an axis L2 of a pillar covering portion 1b and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x3 of the first plane P11 and the virtual division 1c, an intersection point x4 of the second plane P22 and the plane 5, and the center of gravity G.

As described above, the tether mounting method according to Figs. 6(A) to 6(C) is just exemplary. In the figures, the first planes P11 and P12 and the second planes P21 and P22 can be combined optionally.

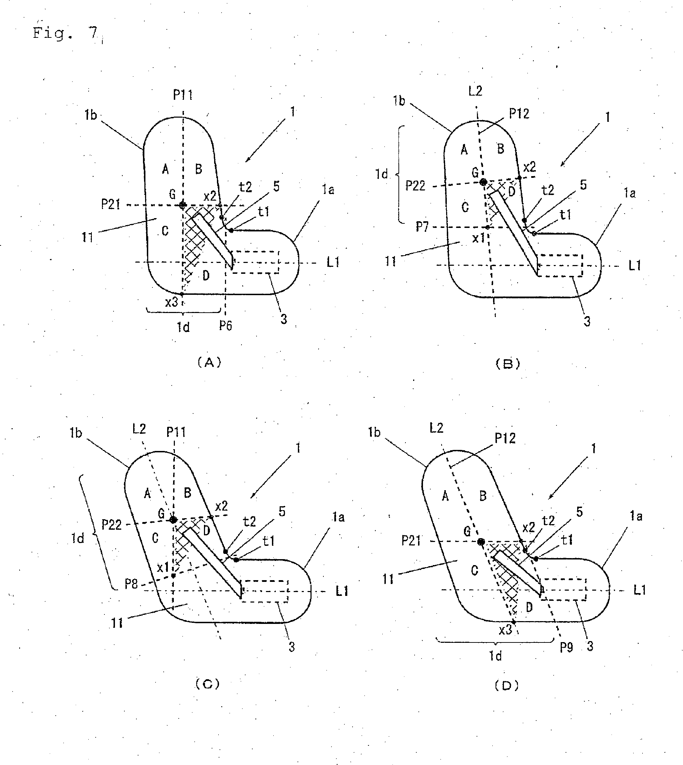

Figs. 7(A) to 7(D) are views showing the tether mounting method according to a further example. Figs. 7(A) to 7(D) each show an airbag 1, as viewed from the vehicle structure side, that is, show a state in which the airbag 1 is placed on the plane with a vehicle-structure-side panel 11 facing out.

The tether mounting method shown in Fig. 7 includes a calculation step, a projection step, and a mounting step, similarly to the third embodiment shown in Fig. 4, and is different from the third embodiment in that one end of a tether 5 is connected in the mounting step on the basis of the center of gravity G calculated in the third embodiment.

In an airbag 1 shown in Fig. 7(A), a virtual division 1d is defined by a plane P6. A surface of a vehicle-structure-side panel 11 in the virtual division 1d is divided into four regions, an A-region, a B-region, a C-region, and a D-region, by a first plane P11 extending parallel to a plane having a perpendicular serving as an axis L1 of a main body 1a and passing through the projected center of gravity G, and a second plane P21 extending perpendicularly to the plane having the perpendicular serving as the axis L1 of the main body 1a and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x3 of the first plane P11 and the virtual division 1d, an intersection point x2 of the second plane P21 and the virtual division 1d, and the center of gravity G. That is, the double-hatched portion is defined as the vicinity of the center of gravity G. When one end of the tether 5 is connected in this way, an advantage similar to that obtained when one end of the tether 5 is connected to the position of the center of gravity G is obtained.

In an airbag 1 shown in Fig. 7(B), a virtual division 1d is defined by a plane P7. A surface of a vehicle-structure-side panel 11 in the virtual division 1d is divided into four regions, an A-region, a B-region, a C-region, and a D-region, by a first plane P12 extending perpendicularly to a plane having a perpendicular serving as an axis L2 of a pillar covering portion 1b and passing through the projected center of gravity G, and a second plane P22 extending parallel to the plane having the perpendicular serving as the axis L2 of the pillar covering portion 1b and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x3 of the first plane P12 and the plane P7, an intersection point x2 of the second plane P22 and the virtual division 1d, and the center of gravity G.

In an airbag 1 shown in Fig. 7(C), a virtual division 1d is defined by a plane P8. A surface of a vehicle-structure-side panel 11 in the virtual division 1d is divided into four regions, an A-region, a B-region, a C-region, and a D-region, by a first plane P11 extending parallel to a plane having a perpendicular serving as an axis L1 of a main body 1a and passing through the projected center of gravity G, and a second plane P22 extending parallel to a plane having a perpendicular serving as an axis L2 of a pillar covering portion 1b and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x1 of the first plane P11 and the plane P8, an intersection point x2 of the second plane P22 and the virtual division 1d, and the center of gravity G.

In an airbag 1 shown in Fig. 7(D), a virtual division 1d is defined by a plane P9. A surface of a vehicle-structure-side panel 11 in the virtual division 1d is divided into four regions, an A-region, a B-region, a C-region, and a D-region, by a first plane P12 extending perpendicularly to a plane having a perpendicular serving as an axis L2 of a pillar covering portion 1b and passing through the projected center of gravity G, and a second plane P21 extending perpendicularly to a plane having a perpendicular serving as an axis L1 of a main body 1a and passing through the projected center of gravity G. One end of a tether 5 is connected to the D-region serving as a proximity region closest to a retainer 3. More specifically, one end of the tether 5 is connected to a portion (a double-hatched portion) of the D-region surrounded by an intersection point x3 of the first plane P12 and the virtual division 1d, an intersection point x2 of the second plane P21 and the virtual division 1d, and the center of gravity G.

The tether mounting method according to Figs. 7 (A) to 7 (D) is just exemplary. In the figures, the first planes P11 and P12 and the second planes P21 and P22 can be combined optionally.

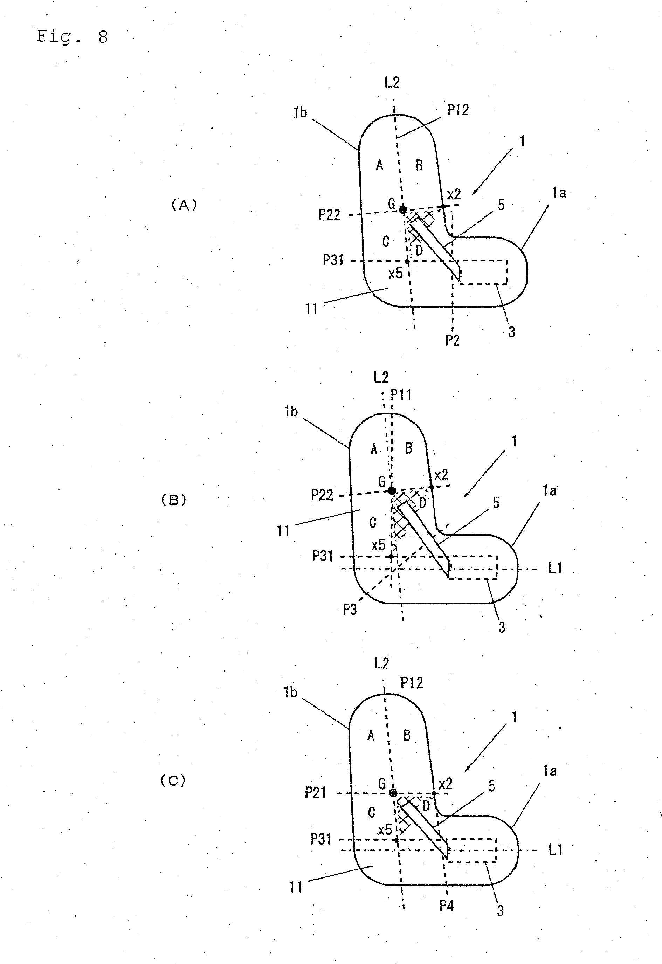

Figs. 8(A) to 8(C) are views showing the tether mounting method according to a further example and respectively correspond to the airbags 1 shown in Figs. 5(B) to 5(D). Figs. 8(A) to 8(C) each show an airbag 1, as viewed from the vehicle structure side, that is, show a state in which the airbag 1 is placed on the plane with a vehicle-structure-side panel 11 facing out.

The tether mounting method shown in Fig. 8 includes a calculation step, a projection step, and a mounting step, similarly to the fourth embodiment shown in Fig. 5, and is different from the fourth embodiment in that the D-region set in the mounting step of the fourth embodiment is further divided by a third plane P31. The third plane P31 is defined as a plane extending perpendicularly to a plane having a perpendicular serving as an axis L1 of a main body 1a and extending along a side face of a retainer 3 toward a pillar covering portion 1b (a side face on the rear side of the vehicle). Therefore, this method is not applied to a case in which the D-region does not intersect the third plane P31 as shown in Fig. 5(A), but is applied to cases in which the D-region intersects the third plane P31, as shown in Figs. 5(B) to 5(D).

As shown in Fig. 8(A), a D-region is divided by a third plane P31, and is redefined as a region smaller than the D-region shown in Fig. 5(B). One end of a tether 5 is connected to the redefined D-region. More specifically, one end of the tether 5 is connected to a portion (a double-hatched portion) surrounded by an intersection point x5 of a first plane P12 and the third plane P31, an intersection point x2 of a second plane P22 and a pillar covering portion 1b, and the center of gravity G. That is, the double-hatched portion is defined as the vicinity of the center of gravity G. Therefore, the vicinity of the center of gravity G can be defined more accurately. When one end of the tether 5 is connected in this way, an advantage similar to that obtained when one end of the tether 5 is connected to the position of the center of gravity G is obtained.

As shown in Fig. 8(B), a D-region is divided by a third plane P31, and is redefined as a region smaller than the D-region shown in Fig. 5(C). One end of a tether 5 is connected to the redefined D-region. More specifically, one end of the tether 5 is connected to a portion (a double-hatched portion) surrounded by an intersection point x5 of a first plane P11 and the third plane P31, an intersection point x2 of a second plane P22 and a pillar covering portion 1b, and the center of gravity G.

As shown in Fig. 8(C), a D-region is divided by a third plane P31, and is redefined as a region smaller than the D-region shown in Fig. 5(D). One end of a tether 5 is connected to the redefined D-region. More specifically, one end of the tether 5 is connected to a portion (a double-hatched portion) surrounded by an intersection point x5 of a first plane P12 and the third plane P31, an intersection point x2 of a second plane P22 and a pillar covering portion 1b, and the center of gravity G.

The tether mounting method according to Figs. 8 (A) to 8 (C) is just exemplary. In the figures, the first planes P11 and P12 and the second planes P21 and P22 can, of course, be combined optionally.

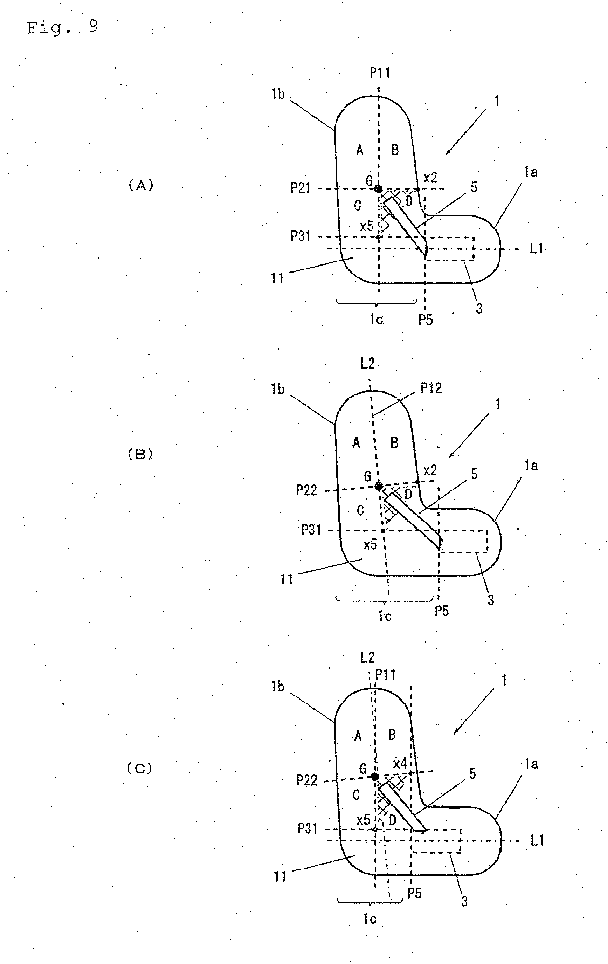

Figs. 9(A) to 9(C) are views showing the tether mounting method according to a further example and respectively correspond to the airbags 1 shown in Figs. 6(A) to 6(C). Figs. 9(A) to 9(C) each show an airbag 1, as viewed from the vehicle structure side, that is, show a state in which the airbag 1 is placed on the plane with a vehicle-structure-side panel 11 facing out.

The tether mounting method shown in Fig. 9 includes a calculation step, a projection step, and a mounting step, similarly to the fifth embodiment shown in Fig. 6, and is different from the fifth embodiment in that the D-region set in the mounting step of the fifth embodiment is further divided by a third plane P31. The third plane P31 is defined as a plane extending perpendicularly to a plane having a perpendicular serving as an axis L1 of a main body 1a and extending along a side face of a retainer 3 toward a pillar covering portion 1b (a side face on the rear side of the vehicle).

As shown in Fig. 9(A), a D-region is divided by a third plane P31, and is redefined as a region smaller than the D-region shown in Fig. 6(A). One end of a tether 5 is connected to the redefined D-region. More specifically, one end of the tether 5 is connected to a portion (a double-hatched portion) surrounded by an intersection point x5 of a first plane P11 and the third plane P31, an intersection point x2 of a second plane P21 and a virtual division 1c, and the center of gravity G. That is, the double-hatched portion is defined as the vicinity of the center of gravity G. Therefore, the vicinity of the center of gravity G can be defined more accurately. When one end of the tether 5 is connected in this way, an advantage similar to that obtained when one end of the tether 5 is connected to the position of the center of gravity G is obtained.

The embodiment shown in Fig. 9(A) was subjected to an airbag deployment test in a state in which one end of the tether 5 was connected to each of the A-region, the B-region, the C-region, and the D-region. As a result, the time elapsed until inflation and deployment of the airbag 1 was completed was shortest in the D-region, and increases in the order of the B-region, the C-region, and the A-region. On comparison, inflation and deployment of the airbag 1 was completed in about one-fourth of the time in the A-region, and inflation and deployment of the airbag 1 was completed in about two-thirds of the time in the B-region. This verified the advantage of the D-region.

As shown in Fig. 9(B), a D-region is divided by a third plane P31, and is redefined as a region smaller than the D-region shown in Fig. 6(B). One end of a tether 5 is connected to the redefined D-region. More specifically, one end of the tether 5 is connected to a portion (a double-hatched portion) surrounded by an intersection point x5 of a first plane P12 and the third plane P31, an intersection point x2 of a second plane P22 and a virtual division 1c, and the center of gravity G.

As shown in Fig. 9(C), a D-region is divided by a third plane P31, and is redefined as a region smaller than the D-region shown in Fig. 6(C). One end of a tether 5 is connected to the redefined D-region. More specifically, one end of the tether 5 is connected to a portion (a double-hatched portion) surrounded by an intersection point x5 of a first plane P11 and the third plane P31, an intersection point x4 of a second plane P22 and a plane P5, and the center of gravity G.

The tether mounting method according to Figs. 9(A) to 9(C) is just exemplary. In the figures, the first planes P11 and P12 and the second planes P21 and P22 can, of course, be combined optionally.

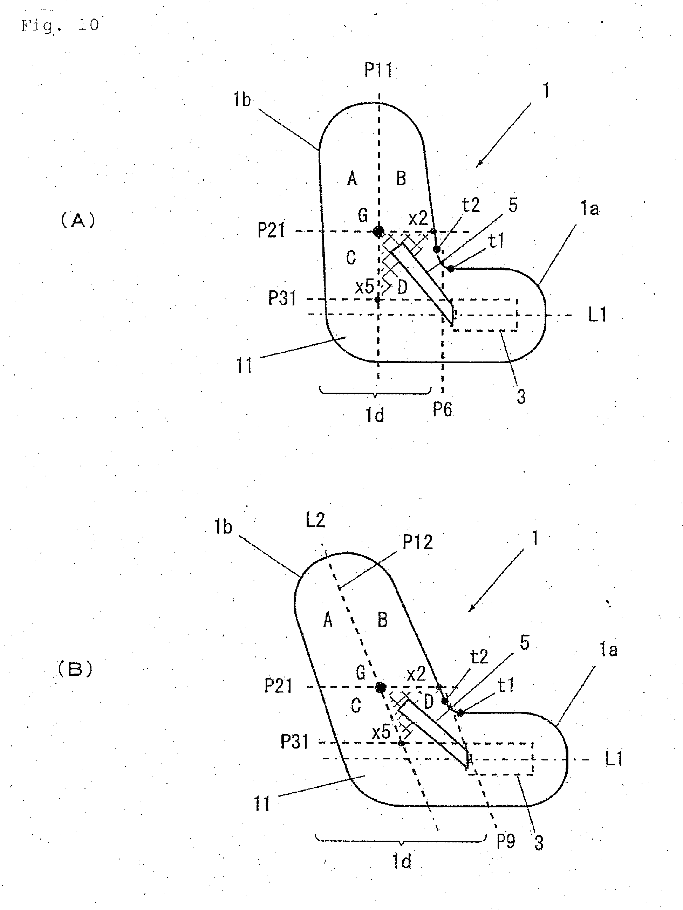

Figs. 10(A) and 10(B) are views showing the tether mounting method according to a further example and respectively correspond to the airbags 1 shown in Figs. 7(A) and 7(D). Figs. 10(A) and 10(B) each show an airbag 1, as viewed from the vehicle structure side, that is, show a state in which the airbag 1 is placed on the plane with a vehicle-structure-side panel 11 facing out.

The tether mounting method shown in Fig. 10 includes a calculation step, a projection step, and a mounting step, similarly to the sixth embodiment shown in Fig. 7, and is different from the sixth embodiment in that the D-region set in the mounting step of the sixth embodiment is further divided by a third plane P31. The third plane P31 is defined as a plane extending perpendicularly to a plane having a perpendicular serving as an axis L1 of a main body 1a and extending along a side face of a retainer 3 toward a pillar covering portion 1b (a side face on the rear side of the vehicle). Therefore, this method is not applied to a case in which the D-region does not intersect the third plane P31 as shown in Figs. 7(B) and 7(C), but is applied to a case in which the D-region intersects the third plane P31, as shown in Figs. 7(A) and 7(D).

As shown in Fig. 10(A), a D-region is divided by a third plane P31, and is redefined as a region smaller than the D-region shown in Fig. 7(A). One end of a tether 5 is connected to the redefined D-region. More specifically, one end of the tether 5 is connected to a portion (a double-hatched portion) surrounded by an intersection point x5 of a first plane P11 and the third plane P31, an intersection point x2 of a second plane P21 and a virtual division 1c, and the center of gravity G. That is, the double-hatched portion is defined as the vicinity of the center of gravity G. Therefore, the vicinity of the center of gravity G can be defined more accurately. When one end of the tether 5 is connected in this way, an advantage similar to that obtained when one end of the tether 5 is connected to the position of the center of gravity G is obtained.

As shown in Fig. 10(B), a D-region is divided by a third plane P31, and is redefined as a region smaller than the D-region shown in Fig. 7(D). One end of a tether 5 is connected to the redefined D-region. More specifically, one end of the tether 5 is connected to a portion (a double-hatched portion) surrounded by an intersection point x5 of a first plane P12 and the third plane P31, an intersection point x2 of a second plane P21 and a virtual division 1c, and the center of gravity G.

The tether mounting method according to Figs. 10(A) and 10(B) is just exemplary. In the figures, the first planes P11 and P12 and the second planes P21 and P22 can, of course, be combined optionally.

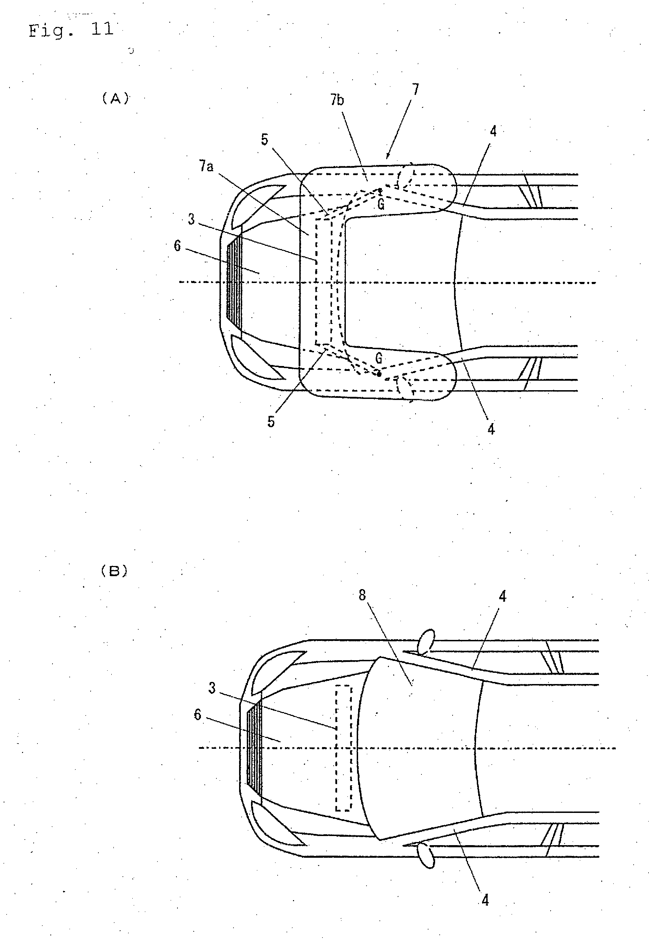

Finally, a description will be given of a case in which the present invention is applied to a substantially U-shaped airbag 7 capable of simultaneously covering right and left pillars 4 and 4 of the vehicle. Figs. 11(A) and 11(B) are views of an airbag device including the substantially U-shaped airbag 7. Fig. 11(A) shows a state after inflation and deployment of the airbag, and Fig. 11(B) shows a state before inflation and deployment of the airbag.

The airbag device shown in Fig. 11 is a pedestrian airbag device that absorbs an impact made when a pedestrian or the like collides with an A-pillar, and is an example of an airbag device in which the airbag 7 has a pair of projecting portions. As shown in Figs. 11(A) and 11(B), the airbag device is disposed in a portion of a front hood 6 along a front window glass 8, and the airbag 7 can cover both pillars 4 and 4 provided on the right and left sides of the vehicle. The airbag 7 includes a main body 7a to be bulged onto the front hood 6, and pillar covering portions 7b and 7b projecting from both ends of the main body 7a so as to cover the pillars 4 and 4. One end of a tether 5 is connected to a projected center of gravity G on a surface of each of the pillar covering portions 7b and 7b on the vehicle structure side. The other end of the tether 5 is connected to a retainer 3. Since the above-described tether mounting methods for the airbag 1 can be applied to a tether mounting method for the airbag 7, other detailed descriptions will be omitted.

The present invention is not limited to the above-described embodiments. For example, the present invention may be applied to a pedestrian airbag disposed at a B-pillar or a C-pillar. The present invention may be applied to various airbags disposed in the vehicle as long as the airbags have a projecting portion.

## Claims

1. A tether mounting method for an airbag device including an inflator (2) configured to generate gas on a predetermined condition, an airbag (1) having a main body (1a) connected to the inflator and a projecting portion (1b) projecting from the main body in a predetermined direction, and a retainer (3) configured to store the airbag, the tether mounting method is **characterized by**:
a calculation step of finding a center of gravity (g) of the projecting portion (1b) after the completion of inflation;
a projection step of determining a projected center of gravity (G) obtained by projecting the calculated center of gravity (g) onto a vehicle-structure-side surface (11) of the projecting portion (1b); and
a mounting step of connecting one end of a tether (5) to the projected center of gravity (G) and connecting the other end of the tether (5) to the retainer (3).

2. The tether mounting method for an airbag device according to Claim 1, wherein, in the calculation step, the airbag (1) is divided by a virtual dividing plane (P5) extending parallel to a plane having a perpendicular serving as an axis (L1) of the main body (1a) and extending along a side face of the retainer (3) toward the projecting portion (1b), and a center of gravity (g) of a virtual division (1d) including the projecting portion (b) is found.

3. The tether mounting method for an airbag device according to Claim 1, wherein, in the calculation step, the airbag (1) is divided by a virtual dividing plane (P6; P7; P8; P9) passing between a turn start point (t1) and a turn end point (t2) of an outer peripheral portion of the airbag (1) extending from the main body (1a) to the projecting portion (1b) and satisfying any of conditions that the virtual dividing plane (P6) is parallel to a plane having a perpendicular serving as an axis (L1) of the main body (1a), that the virtual dividing plane (P7) is perpendicular to the plane having the perpendicular serving as the axis (L1) of the main body (1a), that the virtual dividing plane (P8) is parallel to a plane having a perpendicular serving as an axis (L2) of the projecting portion (1b), and that the virtual dividing plane (P9) is perpendicular to the plane having the perpendicular serving as the axis (L2) of the projecting portion (1b), and a center of gravity (g) of a virtual division (1d) including the projecting portion (1b) is found.

4. The tether mounting method for an airbag device according to any of Claims 1 to 3, wherein the airbag (1) is a pedestrian airbag in which the main body (1a) is inflated and deployed on a hood (6) of the vehicle and the projecting portion (1b) is inflated and deployed along a pillar (4) of the vehicle.

5. An airbag device comprising:
an inflator (2) configured to generate gas on a predetermined condition;
an airbag (1) having a main body (1a) connected to the inflator (2) and a projecting portion (1b) projecting from the main body (1a) in a predetermined direction; and
a retainer (3) configured to store the airbag (1),
**characterized in that** the airbag device further includes a tether (5) that is connected at one end to a projected center of gravity (G) obtained by projecting a calculated center of gravity (g) of the projecting portion (1b) after the completion of inflation onto a vehicle structure-side surface (11) of the projecting portion (1b), and **in that** the tether (5) is connected at the other end to the retainer (3).

6. The airbag device according to Claim 5, wherein the center of gravity (g) is a center of gravity of a virtual division including the projecting portion (1b) when the airbag (1) is divided by a virtual dividing plane (P5) extending parallel to a plane having a perpendicular serving as an axis (L1) of the main body (1a) and extending along a side face of the retainer (3) toward the projecting portion (1b).

7. The airbag device according to claim 5, wherein the center of gravity (g) is a center of gravity of a virtual division (1d) including the projecting portion (1b) when the airbag (1) is divided by a virtual dividing plane (P6; P7; P8; P9) passing between a turn start point (t1) and a turn end point (t2) of an outer peripheral portion of the airbag (1) extending from the main body (1a) to the projecting portion (1b) and satisfying any of conditions that the virtual dividing plane (P6) is parallel to a plane having a perpendicular serving as an axis (L1) of the main body (1a), that the virtual dividing plane (P7) is perpendicular to the plane having the perpendicular serving as the axis (L1) of the main body (1a), that the virtual dividing plane (P8) is parallel to a plane having a perpendicular serving as an axis (L2) of the projecting portion (1b), and that the virtual dividing plane (P9) is perpendicular to the plane having the perpendicular serving as the axis (L2) of the projecting portion (1b).

8. The airbag device according to any of Claims 5 to 7, wherein the airbag (1) is a pedestrian airbag in which the main body (1a) is inflated and deployed on a hood (6) of the vehicle and the projecting portion (1b) is inflated and deployed along a pillar (4) of the vehicle.

## Patentansprüche

1. Verfahren zur Montage eines Haltegurtes für eine Airbag-Vorrichtung mit einem Gasgenerator (2), der zum Erzeugen von Gas unter einer vorherbestimmten Bedingung ausgebildet ist, einem Airbag (1) mit einem Hauptkörper (1a), der mit dem Gasgenerator verbundenen ist und einem vom Hauptkörper in eine vorherbestimmte Richtung vorstehenden Abschnitt (1b), und einer Halterung (3), die zum Aufbewahren des Airbags ausgebildet ist, wobei das Verfahren zur Montage des Haltegurts **gekennzeichnet ist durch**:
einen Berechnungsschritt zum Auffinden eines Schwerpunktes (g) des vorstehenden Abschnitts (1b) nach Vervollständigung des Aufblasens;
einen Projektionsschritt zum Bestimmen eines projizierten Schwerpunktes (G), der **durch** Projizieren des berechneten Schwerpunktes (g) auf eine Fahrzeugkarosserie-Seitenoberfläche (11) des vorstehenden Abschnitts (1b) erhalten wird; und
einen Montageschritt zum Verbinden eines Endes eines Haltegurtes (5) mit dem projizierten Schwerpunkt (G) und Verbinden des anderen Endes des Haltegurtes (5) mit der Halterung (3).

2. Verfahren zur Montage eines Haltegurtes für eine Airbag-Vorrichtung nach Anspruch 1, wobei der Airbag (1) im Berechnungsschritt durch eine virtuelle Teilungsebene (P5) geteilt wird, die sich parallel zu einer Ebene erstreckt, die eine Senkrechte als eine Achse (L1) des Hauptkörpers (1a) hat und sich entlang einer Seitenfläche der Halterung (3) zum vorstehenden Abschnitt (1b) hin erstreckt, und wobei ein Schwerpunkt (g) eines den vorstehenden Abschnitt (1b) enthaltenden virtuellen Bereichs (1d) aufgefunden wird.

3. Verfahren zur Montage eines Haltegurtes für eine Airbag-Vorrichtung nach Anspruch 1, wobei der Airbag (1) im Berechnungsschritt durch eine virtuelle Teilungsebene (P6; P7; P8; P9) geteilt wird, die zwischen einem Dreh-Ausgangspunkt (t1) und einem Dreh-Endpunkt (t2) eines äußeren Umfangsabschnitts des Airbags (1) verläuft, der sich vom Hauptkörper (1a) zum vorstehenden Abschnitt (1b) erstreckt und eine der Bedingungen erfüllt, dass die virtuelle Teilungsebene (P6) parallel zu einer Ebene ist, die eine Senkrechte als eine Achse (L1) des Hauptkörpers (1a) hat, dass die virtuelle Teilungsebene (P7) senkrecht zur Ebene ist, die die Senkrechte als Achse (L1) des Hauptkörpers (1a) hat, dass die virtuelle Teilungsebene (P8) parallel zu einer Ebene ist, die eine Senkrechte als eine Achse (L2) des vorstehenden Abschnitts (1b) hat, und dass die virtuelle Teilungsebene (P9) senkrecht zu der Ebene ist, die die Senkrechte als Achse (L2) des vorstehenden Abschnitts (1b) hat, und ein Schwerpunkt (g) eines den vorstehenden Abschnitt (1b) enthaltenden virtuellen Bereichs (1d) aufgefunden wird.

4. Verfahren zur Montage eines Haltegurtes für eine Airbag-Vorrichtung nach einem der Ansprüche 1 bis 3, wobei der Airbag (1) ein Fußgängerairbag ist, bei dem der Hauptkörper (1a) auf einer Motorhaube (6) des Fahrzeugs aufgeblasen und entfaltet wird und der vorstehende Abschnitt (1b) entlang einer Säule (4) des Fahrzeugs aufgeblasen und entfaltet wird.

5. Airbagvorrichtung mit:
einem Gasgenerator (2), der zum Erzeugen von Gas unter einer vorherbestimmten Bedingung ausgebildet ist;
einem Airbag (1) mit einem mit dem Gasgenerator (2) verbundenen Hauptkörper (1a) und einem vom Hauptkörper (1a) in einer vorherbestimmte Richtung vorstehenden Abschnitt (1b); und
einer Halterung (3), die zum Aufbewahren des Airbags (1) ausgebildet ist,
**dadurch gekennzeichnet, dass** die Airbagvorrichtung ferner einen Haltegurt (5) aufweist, der an einem Ende mit einem projizierten Schwerpunkt (G) verbunden ist, der durch Projizieren eines berechneten Schwerpunktes (g) des vorstehenden Abschnitts (1b) nach Vervollständigung des Aufblasens auf einer Fahrzeugkarosserie-Seitenoberfläche (11) erhalten wird, und wobei der Haltegurt (5) am anderen Ende mit der Halterung (3) verbunden ist.

6. Airbagvorrichtung nach Anspruch 5, wobei der Schwerpunkt (g) ein Schwerpunkt eines virtuellen Bereichs ist, der den vorstehenden Abschnitt (1b) enthält, wenn der Airbag (1) durch eine virtuelle Teilungsebene (P5) geteilt ist, die sich parallel zu einer Ebene erstreckt, die eine Senkrechte als eine Achse (L1) des Hauptkörpers (1a) hat und sich entlang einer Seitenfläche der Halterung (3) zum vorstehenden Abschnitt (1b) hin erstreckt.

7. Airbagvorrichtung nach Anspruch 5, wobei der Schwerpunkt (g) der Schwerpunkt eines virtuellen Bereichs (1d) ist, der den vorstehenden Abschnitt (1b) enthält, wenn der Airbag (1) durch eine virtuelle Teilungsebene (P6; P7; P8; P9) geteilt ist, die zwischen einem Dreh-Ausgangspunkt (t1) und einem Dreh-Endpunkt (t2) eines äußeren Umfangsabschnitts des Airbags (1) verläuft, der sich vom Hauptkörper (1a) zum vorstehenden Abschnitt (1b) erstreckt und eine der Bedingungen erfüllt, dass die virtuelle Teilungsebene (P6) parallel zu einer Ebene ist, die eine Senkrechte als Achse (L1) des Hauptkörpers (1a) hat, dass die virtuelle Teilungsebene (P7) senkrecht zur Ebene ist, die die Senkrechte als Achse (L1) des Hauptkörpers (1a) hat, dass die virtuelle Teilungsebene (P8) parallel zu einer Ebene ist, die eine Senkrechte als eine Achse (L2) des vorstehenden Abschnitts (1b) hat, und dass die virtuelle Teilungsebene (P9) senkrecht zu der Ebene ist, die die Senkrechte als Achse (L2) des vorstehenden Abschnitts (1b) hat.

8. Airbagvorrichtung nach einem der Ansprüche 5 bis 7, wobei der Airbag (1) ein Fußgängerairbag ist bei dem der Hauptkörper (1a) auf einer Motorhaube (6) des Fahrzeugs aufgeblasen und entfaltet wird und der vorstehende Abschnitt (1b) entlang einer Säule (4) des Fahrzeugs aufgeblasen und entfaltet wird.

## Revendications

1. Procédé de montage d'attaches pour un dispositif de coussin gonflable comprenant un générateur de gaz (2) prévu pour générer un gaz dans un état défini, un coussin gonflable (1) avec un corps principal (1a) relié au générateur de gaz et une partie en saillie (1b) partant du corps principal dans une direction définie, et un dispositif de retenue (3) prévu pour loger le coussin gonflable ; ledit procédé de montage d'attaches étant **caractérisé par** :
une étape de calcul permettant de trouver le centre de gravité (g) de la partie en saillie (1b) une fois le gonflage terminé ;
une étape de projection permettant de déterminer le centre de gravité projeté (G) obtenu par projection du centre de gravité calculé (g) sur une surface côté caisse de véhicule (11) de la partie en saillie (1b) ; et
une étape de montage permettant de raccorder une extrémité d'une attache (5) au centre de gravité projeté (G) et de raccorder l'autre extrémité de ladite attache (5) au dispositif de retenue (3).

2. Procédé de montage d'attaches pour un dispositif de coussin gonflable selon la revendication 1, où, lors de l'étape de calcul, le coussin gonflable (1) est partagé par un plan de partage virtuel (P5) qui s'étend parallèlement à un plan présentant une perpendiculaire servant d'axe (L1) du corps principal (1a) et qui s'étend le long d'une face latérale du dispositif de retenue (3) vers la partie en saillie (1b), et où un centre de gravité (g) d'un partage virtuel (1d) incluant la partie en saillie (b) est déterminé.

3. Procédé de montage d'attaches pour un dispositif de coussin gonflable selon la revendication 1, où, lors de l'étape de calcul, le coussin gonflable (1) est partagé par un plan de partage virtuel (P6 ; P7 ; P8 ; P9) passant entre un point de départ de courbe (t1) et un point de fin de courbe (t2) d'une partie de la périphérie extérieure du coussin gonflable (1) qui s'étend du corps principal (1a) à la partie en saillie (1b) et satisfaisant l'une des conditions selon lesquelles le plan de partage virtuel (P6) est parallèle à un plan présentant une perpendiculaire servant d'axe (L1) du corps principal (1a), le plan de partage virtuel (P7) est perpendiculaire au plan présentant la perpendiculaire servant d'axe (L1) du corps principal (1a), le plan de partage virtuel (P8) est parallèle à un plan présentant une perpendiculaire servant d'axe (L2) de la partie en saillie (1b), et le plan de partage virtuel (P9) est perpendiculaire au plan présentant la perpendiculaire servant d'axe (L2) de la partie en saillie (1b), et où un centre de gravité (g) d'une partage virtuel (1d) incluant la partie en saillie (1b) est déterminé.

4. Procédé de montage d'attaches pour un dispositif de coussin gonflable selon l'une des revendications 1 à 3, où le coussin gonflable (1) est un coussin gonflable pour piéton où le corps principal (1a) est gonflé et expansé sur le capot (6) du véhicule, et la partie en saillie (1b) est gonflée et expansée le long d'un montant (4) du véhicule.

5. Dispositif de coussin gonflable, comprenant :
un générateur de gaz (2) prévu pour générer un gaz dans un état défini ;
un coussin gonflable (1) avec un corps principal (1a) relié au générateur de gaz (2) et une partie en saillie (1b) partant du corps principal (1a) dans une direction définie ; et un dispositif de retenue (3) prévu pour loger le coussin gonflable (1),
**caractérisé en ce que** ledit dispositif de coussin gonflable comprend en outre une attache (5) raccordée par une extrémité à un centre de gravité projeté (G) obtenu par projection d'un centre de gravité calculé (g) de la partie en saillie (1b) sur une surface côté caisse de véhicule (11) de la partie en saillie (1b), une fois le gonflage terminé, et **en ce que** l'attache (5) est raccordée par l'autre extrémité au dispositif de retenue (3).

6. Dispositif de coussin gonflable selon la revendication 5, où le centre de gravité (g) est un centre de gravité d'un partage virtuel incluant la partie en saillie (1b) lorsque le coussin gonflable (1) est divisé par un plan de partage virtuel (P5) qui s'étend parallèlement à un plan présentant une perpendiculaire servant d'axe (L1) du corps principal (1a), et qui s'étend le long d'une face latérale du dispositif de retenue (3) vers la partie en saillie (1b).

7. Dispositif de coussin gonflable selon la revendication 5, où le centre de gravité (g) est un centre de gravité d'un partage virtuel (1d) incluant la partie en saillie (1b) lorsque le coussin gonflable (1) est divisé par un plan de partage virtuel (P6 ; P7 ; P8 ; P9) passant entre un point de départ de courbe (t1) et un point de fin de courbe (t2) d'une partie de périphérie extérieure du coussin gonflable (1) qui s'étend du corps principal (1a) à la partie en saillie (1b) et satisfaisant à l'une des conditions selon lesquelles le plan de partage virtuel (P6) est parallèle à un plan présentant une perpendiculaire servant d'axe (L1) du corps principal (1a), le plan de partage virtuel (P7) est perpendiculaire au plan présentant la perpendiculaire servant d'axe (L1) du corps principal (1a), le plan de partage virtuel (P8) est parallèle à un plan présentant une perpendiculaire servant d'axe (L2) de la partie en saillie (1b), et le plan de partage virtuel (P9) est perpendiculaire au plan présentant la perpendiculaire servant d'axe (L2) de la partie en saillie (1b).

8. Dispositif de coussin gonflable selon l'une des revendications 5 à 7, où le coussin gonflable (1) est un coussin gonflable pour piétons où le corps principal (1a) est gonflé et expansé sur le capot (6) du véhicule, et la partie en saillie (1b) est gonflée et expansée le long d'un montant (4) du véhicule.
